# EUROPÄISCHE PATENTSCHRIFT

(11) **EP 0 445 352 B1**
(45) Veröffentlichungstag und Bekanntmachung des Hinweises auf die Patenterteilung: **24.02.1993**
(21) Anmeldenummer: 90115577.0
(22) Anmeldetag: 14.08.1990
(51) Int. Cl.: F16L 51/02, F16L 59/18

(54) **Flexibles Leitungselement mit Wärmeisolierung**
Flexible pipe component with heat insulation
Elément de conduite flexible avec isolation thermique

(30) Priorität: 09.03.1990 DE 9002752 U
(43) Veröffentlichungstag der Anmeldung: 11.09.1991
(73) Patentinhaber: IWK Regler und Kompensatoren GmbH, D-76288 Stutensee-Blankenloch (DE)
(72) Erfinder: Huzenlaub, Peter, D-7521 Dettenheim (DE); Schmidt, Heinz, D-7500 Karlsruhe 1 (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- GB-A- 2 052 665
- US-A- 2 937 036
- US-A- 4 045 056
- US-A- 4 047 740

## Beschreibung

Die Erfindung betrifft eine Vorrichtung zur flexiblen, gasdichten Verbindung von Leitungen, mit einem Balg, der an jedem Ende ein mit einer Leitung verbindbares Anschlußstück aufweist, und mit einer sich zwischen den Anschlußstücken erstreckenden Isolierung aus einem beidseits ummantelten, temperaturbeständigen Wärmedämmaterial.

Derartige flexible Leitungselemente werden in der Regel als Zwischenstücke in Leitungen eingebaut, um Bewegungen und Schwingungen aufzunehmen und von der Weiterleitung an benachbarte Bauteile abzukoppeln. Insbesondere werden diese Elemente bei Leitungen, die heiße Gase führen, eingesetzt. Dabei treten auch temperaturänderungsbedingte Längenänderungen auf, so daß diese Leitungselemente eine hohe Flexibilität und einen großen Spielraum im Bezug auf radiale und axiale Bewegungen aufweisen müssen.

Um diesen Anforderungen gerecht zu werden, muß der die gasdichte Verbindung herstellende Balg entsprechend dünnwandig ausgebildet sein. Dem steht die Forderung gegenüber, daß gerade bei heißen Gasströmen der Balg eine ausreichende thermische und Druckbelastbarkeit aufweisen muß. Dies bedeutet also, daß der Balg so dimensioniert werden muß, daß ein Kompromiß zwischen einer guten Beweglichkeit und einer ausreichenden thermischen und Druckbelastbarkeit gefunden wird. Insbesondere bei Nickelbasiswerkstoffen ist eine Temperaturreduzierung zur Reduzierung der Versprödungsgefahr wichtig. Es wurde schon vorgeschlagen innerhalb des Balgs eine Faserschicht anzuordnen und durch Stopfung in die Balgwellen einzudrücken. Hierdurch ergibt sich ein komplizierter Aufbau, da zur Haltung des Isoliermaterials ein Agraffschlauch erforderlich ist; eine hinreichende Wärmedämmung ist schlecht erreichbar.

Eine Vorrichtung der oben gennanten Art ist aus der GB-A-2 052 665 bekannt. Diese zeigt eine bewegliche Rohrverbindung mit einem Balg in form einer Welle. Innerhalb des Balgs ist ein gewellter Isolierschlauch vorgesehen, dessen Enden jeweils gemeinsam mit dem Balg an Anschlußstücken angeordnet sind; Der Isolierschlauch besteht aus einer zwischen zwei Textillagen angeordneten Lage aus Isoliermaterial.

Als nachteilig ist hierbei anzusehen, daß das Isolationsmaterial im Einspannungsbereich an den Enden der Isolierung durch die Befestigung mit dem Balg stark verdichtet ist und dort viel Wärme zum Balg leitet. Eine gewellte Isolierung kann aus Verformungsgründen nicht sehr dick bearbeitet werden, selbst wenn dies erforderlich wäre.

Die Fertigung der gewellten Isolierung ist aufwendig und teuer. Die beidseitig eingespannte, gewellte Isolierung vergrößert die Steifigkeit des Kompensators (erhöhte Verstellkräfte). Eine hundertprozentig gasdichte Anbindung der Bälge an die Anschlußstücke ist in Verbindung mit der dazwischenliegenden Isolation problematisch. Die gewellte Isolierung hat eine endliche Lebensdauer, da diese mit dem Balg mitbewegt wird.

Weiterhin ist aus der US-A-2 937 036 eine temperaturfeste Rohrkupplung zweier Rohrenden bekannt. Die Rohrenden bilden eine innere Teleskopverbindung und sind von einer äußeren Teleskopverbindung umgeben. Diese besteht aus äußeren, ineinandergesteckten Rohrabschnitten, die über gerippte Wärmeabstrahlelemente jeweils an einem Rohrende angeordnet sind und in ihrem Einsteckbereich zur Abdichtung einen dazwischenliegenden O-Ring aufweisen. Zwischen der äußeren und inneren Teleskopverbindung ist zur Wärmeisolation eine Glasfasermatte angeordnet.

Die bekannte Vorrichtung weist keinen Balg zur flexiblen, gasdichten Verbindung der Rohrenden auf. Der verwendete verschiebbare O-Ring ist nicht absolut gasdicht. Die Wärmeisolation ist weder im Inneren angeordnet noch ist eine feste Isolierkassette vorgesehen. Da die Wärmeisolation nicht im Inneren angeordnet ist, ergibt sich ein Kontakt der äußeren Rohrabschnitte zu Rohrbereichen, die innenseitig direkt von einem gegebenenfalls heißen Medium beaufschlagt sind, so daß die Wärmeabstrahlelemente zusätzlich zur Isolation erforderlich sind. Darüber hinaus besteht die Vorrichtung aus einer Vielzahl von Teilen und ist aufwendig herzustellen.

Aufgabe der vorliegenden Erfindung ist es, eine Vorrichtung der eingangs genannten Art unter Vermeidung der vorgenannten Nachteile dahingehend weiterzubilden, daß sie eine hohe dauerhafte Wärmeisolation bei guter Hitzebeständigkeit aufweist.

Diese Aufgabe wird dadurch gelöst, daß eine sich in das Innere beider Anschlußstücke hineinerstreckende, mit dem Wärmedämmaterial gefüllte, doppelrohrförmige Isolierkassette als Isolierung vorgesehen ist, daß zwischen der Isolierkassette und den Anschlußstücken jeweils eine Abdichtung vorgesehen ist, und daß eine Abdichtung gleitend an einem Anschlußstück innenseitig anliegt.

Bei der erfindungsgemäßen Lösung ist die Isolierung nicht an die Bewegung des Balgs gekoppelt. So wird die feste Isolierkassette und damit das Dämmaterial nicht verformt und es ergibt sich eine quasi unbegrenzte Lebensdauer der Isolierung und definierte Isolationseigenschaften bleiben erhalten. Weiter kann die Isolierkassette und die Schicht aus wärmedämmendem Material fast beliebig dick ausgebildet werden, so daß je nach den Anforderungen eine gewünschte Wärmedämmung erreicht wird. Die vorgesehene Abdichtung der Isolierkassette zu den Anschlußstücken stellt sicher, daß der Zwischenraum zwischen Balg und Isolierkassette nicht durchströmt wird, um die thermische Belastung des Balgs zu reduzieren. Weiterhin kann die erfindungsgemäße Isolierkassette auch nachträglich in ein flexibles Leitungselement eingebaut werden.

Die Isolierkassette kann ein- oder mehrteilig ausgebildet sein. Hierbei ist insbesondere interessant, daß durch Mehrteiligkeit am Umfang- und Stoßüberdeckung mit selbstklebendem Stoßdichtband aus Keramikfaser die Kassetten auch nachträglich von innen in flexible Leitungselemente eingebaut werden können. Dabei wird eine große Festigkeit erreicht, in dem der Kassettenmantel der Isolierkassette aus austenitischen Werkstoffen besteht, insbesondere erwies sich die Kombination des Werkstoffs 1. 4541 als Kassettenmantel und dem innenliegenden Dämmaterial in Form von Mineral(keramik)faser, wie als Wirrlage von Tonerde-Silikat-Fasern, wie sie von der Fa. SEPR Société Européenne de Produits Réfractaires, Frankreich unter der Bezeichnung Kerlane 45 vertrieben werden, als vorteilhaft. Inbesondere ist eine Dichte von 125 bis 130 kg/ m³ günstig.

Eine vorteilhafte Ausbildung ergibt sich dadurch, daß eine Abdichtung in Form einer Rundschnurdichtung vorgesehen ist, und daß die Dichtung vorzugsweise eine Keramikfaserschnur ist. Hierbei vereint sich eine gute Dichtwirkung mit genügender Flexibilität und ausreichender thermischer Belastbarkeit.

Damit die Dichtung nicht verrutscht, ist es vorteilhaft, wenn die Dichtung mit Folienstreifen an dem Kassettenmantel befestigt ist.

Gemäß bevorzugter Ausgestaltung ist vorgesehen, daß die Isolierkassette durch ein an einem Anschlußstück befestigtes und bis in das andere Anschlußstück hineinragendes Schutzrohr getragen ist und daß der Außendurchmesser des Schutzrohrs kleiner als der Innendurchmesser der Anschlußstücke ist, wobei weiterhin das Schutzrohr über einen Anschlußring an einem Anschlußstück befestigt ist. Diese Ausgestaltungen haben den Vorteil, daß zwischen dem Schutzrohr und Balg ein nicht durchströmter Zwischenraum geschaffen wird, der durch die Isolationskassette in Verbindung mit der flexiblen Dichtung eine gute thermische Isolierung gegenüber dem Leitungsinneren realisiert, so daß die thermische Belastung des Balgs deutlich geringer ist, und damit eine entsprechend dünnwandigere und kostengünstigere Ausführung des Balgs möglich ist. Es ist zudem auch möglich, ältere Verbindungen mit einer geeigneten Ausbildung der Isolationskassetten nachzurüsten.

Eine vorteilhafte Ausführung wird dadurch gegeben, daß das Schutzrohr an seinem freien Ende einen Abschlußring aufweist. Dies verhindert, daß bei einer axialen Streckung des Leitungselementes der Dichtring vom Schutzrohr durch das sich relativ zum Schutzrohr bewegende Anschlußstück abrutschen kann.

Die vorliegende Erfindung wird anhand der Zeichnung eines Ausführungsbeispiels im folgenden näher erläutert:
Figur 1 - Längsschnitt durch das Leitungselement
Figur 2 - Radialschnitt durch das Leitungselement.

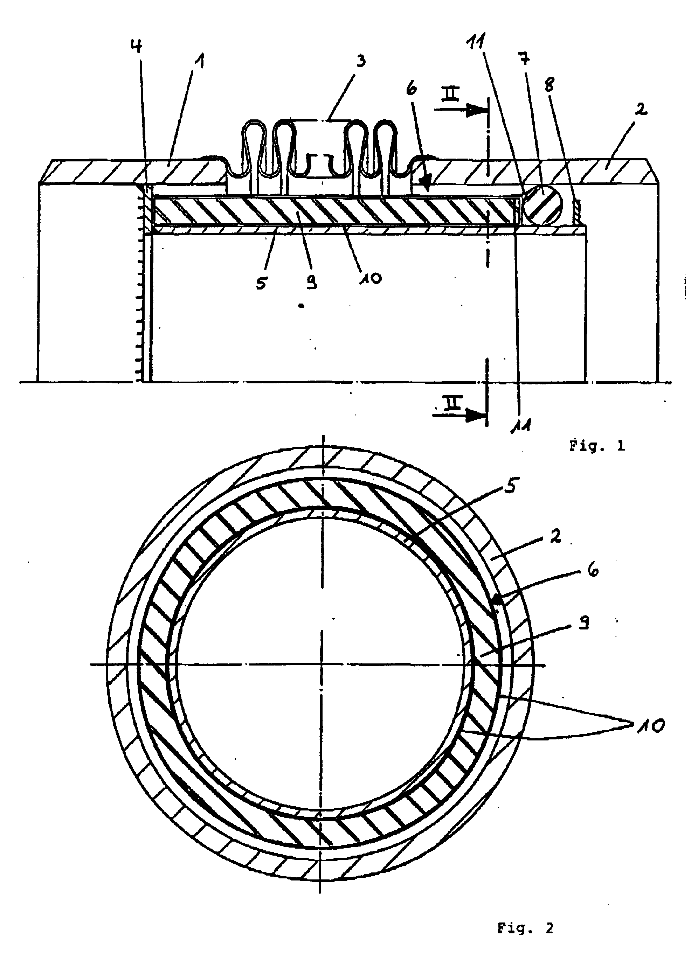

Figur 1 zeigt im Schnitt den Aufbau einer erfindungsgemäßen Ausführung. Das Leitungselement besteht aus den beiden Anschlußstücken 1, 2, einem Balg 3, wie aus einer Nickellegierung, z.B. NiCr 22 Mo 9 Nb (Werkstoff Nr. 2.4856) oder ähnlich, dem über den Anschlußring 4 am Anschlußstück 1 befestigten Schutzrohr 5 und der Isolationskassette 6 mit Dichtung 7. Zudem weist das Schutzrohr 5 einen Abschlußring 8 auf. Die Isolationskassette 6 besteht aus dem innenliegenden Dämmaterial 9 und dem Kassettenmantel 10. Über die Folie 11 ist die Dichtung 7 mit dem Kassettenmantel 10 verbunden.

Bei dieser Ausführung werden die Anschlußstücke 1, 2 jeweils an eine Leitung angeschweißt, und der Balg 3 stellt die flexible, gasdichte Verbindung zwischen den beiden Anschlußstücken 1, 2 dar. Durch die Verwendung der Isolationskassette 6 in Verbindung mit der vorzugsweise als Keramikfaserschnur ausgebildeten Dichtung 7 wird eine wirksame Wärmeisolierung realisiert. Durch den Einsatz des Schutzrohres 10 entsteht zwischem dem Balg 3 und der Isolationskassette 6 ein nicht durchströmter Zwischenraum, wodurch eine weitere Verringerung der thermischen Belastung bei Förderung heißer Medien erreicht wird. Es hat sich gezeigt, daß Mineralfaser, wie eine Wirrlageschicht aus Tonerde-Silikat-Fasern (Kerlane 45) mit einer Dichte von 128 kg/m³ hervorragende Isolationseigenschaften besitzt. Als Kassettenmantel hat sich der austenitische Werkstoff 1.4541 als günstig erwiesen. Um eine gute Isolierung zu gewährleisten, ist es vorteilhaft, die Isolationskassetten 6 weit in beide Anschlußstücke 1, 2 hineinreichen zu lassen. Dies ermöglicht zudem einen großen Streckbereich für den Balg 3 ohne daß dabei der Balg 3 über die Dichtung 7 hinausragt, vielmehr die Dichtung 7 immer noch innenseitig am Anschlußstück 2 anliegt. Damit bei einer solchen axialen Streckung die Dichtung 7 nicht vom Schutzrohr 10 abrutschen kann, weist dieses den Abschlußring 8 auf. Auch ist die Dichtung 7 etwa alle 100 mm über den Ringumfang durch ca. 0,1 mm dicke und ca. 10 mm breite Folienstreifen aus dem Werkstoff 1.4541 oder ähnlich an den Stirnseiten oder Abschlußstufen der Isolationskassette 6 befestigt.

In Figur 2 ist zur Verdeutlichung ein Radialschnitt durch das Leitungselement dargestellt. Außen ist das Anschlußstück 2 zu erkennen. Es folgt ein ringförmiger Hohlraum der eine Bewegung gerade im Bezug auf Winkelbeaufschlagung der beiden Anschlußstücke 1, 2 gegeneinander gewährleistet. Es schließt sich die in diesem Fall einstückig ausgebildete Isolationskassette 6 an, und ganz innen ist das Schutzrohr 5 zu erkennen.

## Patentansprüche

1. Vorrichtung zur flexiblen, gasdichten Verbindung von Leitungen, mit einem Balg, der an jedem Ende ein mit einer Leitung verbindbares Anschlußstück aufweist, und mit einer sich zwischen den Anschlußstücken erstreckenden Isolierung aus einem beidseits unnmantelten, temperaturbeständigen Wärmedämmaterial, **dadurch gekennzeichnet**, daß eine sich in das Innere beider Anschlußstücke (1, 2) hineinerstreckende, mit dem Wärmedämmaterial (9) gefüllte, doppelrohrförmige Isolierkassette (6) als Isolierung vorgesehen ist, daß zwischen der Isolierkassette (6) und den Anschlußstücken (1, 2) jeweils eine Abdichtung vorgesehen ist, und daß eine Abdichtung gleitend an einem Anschlußstück (2) innenseitig anliegt.

2. Vorrichtung nach Anspruch 1, dadurch gekennzeichnet, daß die Kassette (6) Dämmaterial (9) aus Keramikfasern enthält.

3. Vorrichtung nach Anspruch 2, dadurch gekennzeichnet, daß das Dämmaterial (9) Keramikfaser ist.

4. Vorrichtung nach einem der Ansprüche 1 bis 3, dadurch gekennzeichnet, daß das Dämmaterial (9) eine Dichte von 48 bis 130 kg/m³ (Stopfdichte 96 bis 160 kg/m³) aufweist.

5. Vorrichtung nach einem der Ansprüche 1 bis 4, dadurch gekennzeichnet, daß der Kassettenmantel (10) der Isolierkassette (6) aus austenitischem Werkstoff besteht.

6. Vorrichtung nach Anspruch 5, dadurch gekennzeichnet, daß der Kassettenmantel (10) aus dem austenitischen Werkstoff 1.4541 besteht.

7. Vorrichtung nach einem der Ansprüche 1 bis 6, dadurch gekennzeichnet, daß zwischen den Stirnseiten der Isolierkassette (6) und den Anschlußstücken (1,2) eine Abdichtung vorgesehen ist.

8. Vorrichtung nach Anspruch 7, dadurch gekennzeichnet, daß eine Abdichtung durch eine Dichtschnur (7) gebildet ist.

9. Vorrichtung nach Anspruch 8, dadurch gekennzeichnet, daß die Dichtschnur (7) vorzugsweise eine Keramikfaserschnur ist.

10. Vorrichtung nach einem der Ansprüche 7 bis 9, dadurch gekennzeichnet, daß die Abdichtung mit Folienstreifen (11) an dem Kassettenmantel (10) befestigt ist.

11. Vorrichtung nach einem der Ansprüche 1 bis 10, dadurch gekennzeichnet, daß die Isolierkassette (6) durch ein an einem Anschlußstück (1) befestigtes und bis in das andere Anschlußstück (2) hineinragendes Schutzrohr (5) getragen ist.

12. Vorrichtung nach Anspruch 11, dadurch gekennzeichnet, daß der Außendurchmesser des Schutzrohrs (5) kleiner als der Innendurchmesser der Anschlußstücke (1, 2) ist.

13. Vorrichtung nach Anspruch 11 oder 12, dadurch gekennzeichnet, daß das Schutzrohr (5) über einen Anschlußring (4) an einem Anschlußstück (1) befestigt ist.

14. Vorrichtung nach einem der Ansprüche 11 bis 13, dadurch gekennzeichnet, daß das Schutzrohr (5) an seinem freien Ende einen Abschlußring (8) aufweist.

## Claims

1. Device for the flexible, gastight connection of pipes, with a bellows, which has at each end a union connectable to a pipe, and with an insulation extending between the unions formed from a heat-resistant thermal insulation material covered on both sides, characterized in that the insulation is constituted by a double tubular insulating cassette ( 6 ) filled with the thermal insulation material (9) and extending into the interior of both unions (1, 2), that between the insulating cassette (6) and the unions (1, 2) is in each case provided a seal and that a seal slidingly engages on the inside of a union (2).

2. Device according to claim 1, characterized in that the cassette (6) contains insulating material (9) formed from ceramic fibres.

3. Device according to claim 2, characterized in that the insulating material (9) is ceramic fibres.

4. Device according to one of the claims 1 to 3, characterized in that the insulating material (9) has a density of 48 to 130 mg/m³ (stuffing density 96 to 160 kg/m³).

5. Device according to one of the claims 1 to 4, characterized in that the cassette casing (10) of the insulating cassette (6) is made from austenitic material.

6. Device according to claim 5, characterized in that the cassette casing (10) is made from austenitic material 1. 4541.

7. Device according to one of the claims 1 to 6, characterized in that a seal is placed between the end faces of the insulating cassette (6) and the unions (1, 2).

8. Device according to claim 7, characterized in that a seal is formed by a sealing cord (7).

9. Device according to claim 8, characterized in that the sealing cord (7) is preferably a ceramic fibre cord.

10. Device according to one of the claims 7 to 9, characterized in that the seal is fixed with foil strips (11) to the cassette casing (10).

11. Device according to one of the claims 1 to 10, characterized in that the insulating cassette (6) is carried by a protective tube (5) fixed to a union (1) and projecting into the other union (2).

12. Device according to claim 11, characterized in that the external diameter of the protective tube (5) is seller than the internal diameter of the unions (1, 2).

13. Device according to claims 11 or 12, characterized in that the protective tube (5) is fixed by means of a joining ring (4) to a union (1).

14. Device according to one of the claims 11 to 13, characterized in that the protective tube (5) is provided with an end ring (8) at its free end.

## Revendications

1. Dispositif pour le raccordement flexible et étanche aux gaz de conduites, comprenant un soufflet muni à chaque extrémité d'une pièce de raccordement pouvant être rattachée à une conduite, et une isolation constituée d'un matériau calorifuge enrobé des deux côtés et résistant à la chaleur , qui s'étend entre les pièces de raccordement, **caractérisé en ce** qu'une cassette d'isolement (6) en forme de tubes jumelés remplie du matériau calorifuge (9) et s'étendant dans l'intérieur des deux pièces de raccordement (1, 2) est prévue comme isolation, qu'un joint d'étanchéité est respectivement prévu entre la cassette d'isolement (6) et les pièces de raccordement (1, 2), et qu'un joint d'étanchéité est appliqué de manière coulissante contre la face intérieure d'une pièce de raccordement (2).

2. Dispositif selon la revendication 1, caractérisé en ce que la cassette (6) contient du matériau calorifuge (9) constitué de fibres céramiques.

3. Dispositif selon la revendication 2, caractérisé en ce que le matériau calorifuge (9) est constitué de fibres céramiques.

4. Dispositif selon l'une des revendications 1 à 3, caractérisé en ce que le matériau calorifuge (9) présente une densité de 48 à 130 kg/m³ (densité de bourrage 96 à 160 kg/m³)

5. Dispositif selon l'une des revendications 1 à 4, caractérisé en ce que l'enveloppe (10) de la cassette d'isolement (6) est constituée d'un matériau austénitique.

6. Dispositif selon la revendication 5, caractérisé en ce que l'enveloppe (10) de la cassette est constitué du matériau austénitique 1.4541.

7. Dispositif selon l'une des revendications 1 à 6, caractérisé en ce qu'un système d'étanchement est prévu entre les faces frontales de la cassette d'isolement (6) et les pièces de raccordement (1, 2).

8. Dispositif selon la revendication 7, caractérisé en ce qu'un système d'étanchement est constitué par un cordon d'étanchéité (7).

9. Dispositif selon la revendication 8, caractérisé en ce que le cordon d'étanchéité (7) est de préférence un cordon de fibres céramiques.

10. Dispositif selon l'une des revendications 7 à 9, caractérisé en ce que le système d'étanchement est fixé avec des bandes de film (11) sur l'enveloppe (10) de la cassette.

11. Dispositif selon l'une des revendications 1 à 10, caractérisé en ce que la cassette d'isolement (6) est portée par une gaine de protection (5) fixée sur l'une des pièces de raccordement (1) et s'étendant jusque dans l'une pièce de raccordement (2).

12. Dispositif selon la revendication 11, caractérisé en ce que le diamètre extérieur de la gaine de protection (5) est inférieur au diamètre intérieur des pièces de raccordement (1, 2).

13. Dispositif selon l'une des revendications 11 ou 12, caractérisé en ce que la gaine de protection (5) est fixée sur l'une des pièces de raccordement (1) par l'intermédiaire d'une bague de raccordement (4).

14. Dispositif selon l'une des revendications 11 à 13, caractérisé en ce que la gaine de protection (5) est munie à son extrémité libre d'une bague d'extrémité (8).
